# EUROPÄISCHE PATENTSCHRIFT

(11) **EP 0 507 155 B1**
(45) Veröffentlichungstag und Bekanntmachung des Hinweises auf die Patenterteilung: **31.05.1995**
(21) Anmeldenummer: 92104764.3
(22) Anmeldetag: 19.03.1992
(51) Int. Cl.: G21C 9/004

(54) **Notfallfilter für Kernreaktor**
Emergency filter for nuclear reactor
Filtre d'urgence pour réacteur nucléaire

(30) Priorität: 03.04.1991 DE 4110680
(43) Veröffentlichungstag der Anmeldung: 07.10.1992
(73) Patentinhaber: RWE Energie Aktiengesellschaft, 45128 Essen (DE)
(72) Erfinder: Berg, Diethart, Dipl.-Ing., W-4352 Herten-Westerholt (DE); Riedel, Wolfgang, Dipl.-Ing., W-6947 Laudenbach (DE)
(74) Vertreter: Andrejewski, Walter

(56) Entgegenhaltungen:
- EP-A- 0 332 950
- WO-A-90/16071
- DE-A- 3 824 606
- NUCLEAR TECHNOLOGY Bd. 72, Nr. 3, März 1986, LA GRANGE PARK, ILLINOIS, USA Seiten 268 - 290; WOLFGANG K. E. BRAUN ET AL.: 'The reactor containment of standard-design german pressurized water reactors'

## Beschreibung

Die Erfindung betrifft einen Kernreaktor mit Reaktorsicherheitsbehälter, den Reaktorsicherheitsbehälter umgebendem, durch ein Ringraumbauwerk gebildetem Ringraum, Hilfsanlagengebäude und Fortluftkamin, wobei eine Einrichtung für die Druckentlastung des Reaktorsicherheitsbehälters eingerichtet ist, wobei eine über zumindest einen Ventilator an den Fortluftkamin angeschlossene Einrichtung zur Störfall-Unterdruckhaltung eingerichtet ist, wobei die Einrichtung für die Druckentlastung des Reaktorsicherheitsbehälters mit Filtern sowie die Einrichtung zur Störfall-Unterdruckhaltung mit Störfallfiltern ausgestattet sind. Bei dem Kernreaktor des vorstehend beschriebenen grundsätzlichen Aufbaus kann es sich im übrigen um einen Druckwasserreaktor, einen Siedewasserreaktor oder um einen Reaktor anderen Typs handeln. - Im allgemeinen ist das Metallfaserfilter in dem Reaktorsicherheitsbehälter angeordnet, das Molekularsieb in dem Hilfsanlagengebäude. Es kann aber auch das Metallfaserfilter in dem Hilfsanlagengebäude angeordnet sein. Im allgemeinen sind fernerhin die Störfallfilter in dem Hilfsanlagengebäude angeordnet, sie können jedoch auch, zumindest zum Teil, in dem Ringraum angeordnet sein. Störfall bezeichnet den sog. Auslegungsstörfall, bei dem radioaktive Substanzen freigesetzt werden. Der Begriff Störfall umfaßt nicht die sog. auslegungsüberschreitenden Ereignisse der Kernschmelze. Im Auslegungsstörfall sowie bei auslegungsüberschreitenden Ereignissen mit Kernschmelze werden radioaktive Substanzen über Leckagen des Reaktorsicherheitsbehälters in den Ringraum freigesetzt. Nach der herrschenden Baulehre orientiert sich die Auslegung der Störfallfilter an den Auslegungskriterien für den Auslegungsstörfall. Beim Auslegungsstörfall ist der Radioaktivitätsanfall im Vergleich zum auslegungsüberschreitenden Ereignis mit Kernschmelze klein.

Bei dem aus der Praxis bekannten Kernreaktor bestehen die Störfallfilter aus zumindest einem Aktivkohlefilter und ggf. zumindest einem weiteren nachgeschalteten Schwebstofffilter. Baustoffe für diese Filter sind Zellstoffvliesmaterial und Papier, Kohle und dgl. Die insoweit bekannten Maßnahmen haben sich bewährt, sind jedoch nicht anwendbar, um bei einem auslegungsüberschreitenden Ereignis mit Kernschmelze, wenn es erforderlich ist, die Funktionstüchtigkeit der Aktivitätsabsaugung aus dem Ringraum für die Zeit im unmittelbaren Anschluß an die Kernschmelze bis zur Druckentlastung und darüber hinaus während der Überdruckphase im Sicherheitsbehälter sicherzustellen. Insoweit sind besondere Sicherheitsmaßnahmen und Einrichtungen erforderlich. Ein Kernreaktor des eingangs genannten Aufbaus ist bekannt aus der Literaturstelle "Nuclear Technology, Band 72, Nr. 3, März 1986, LA GRANGE PARK, Illinois, USA, S. 268 bis 290". Bei dem insofern bekannten Reaktor sind einerseits Filter zur Druckentlastung des Reaktorsicherheitsbehälters und andererseits Störfallfilter zur Störfall-Unterdruckhaltung eingerichtet. Die Störfallfilter zur Störfall-Unterdruckhaltung sind jedoch nicht nach Maßgabe eines auslegungsüberschreitenden Ereignisses mit Kernschmelze ausgelegt, sondern lediglich nach Maßgabe von Auslegungsstörfällen. Ein auslegungsüberschreitendes Ereignis mit Kernschmelze führt zum Totalausfall der Störfilter zur Störfall-Unterdruckhaltung. Folglich kann zumindest ein Teil des Kerninventars im Falle eines Ereignisses mit Kernschmelze und bei Undichtigkeiten des Reaktorsicherheitsbehälters in die Umgebung entweichen. Dies stört aus offensichtlichen Gründen. Aus der Literaturstelle WO-A-90 16 071 ist es bekannt, eine Einrichtung für die Druckentlastung des Reaktorsicherheitsbehälters mit zu einem Metallfaserfilter und zumindest einem nachgeschalteten Molekularsieb auszustatten.

Der Erfindung liegt die Aufgabe zugrunde, einen Kernreaktor des eingangs beschriebenen Aufbaus so weiter auszubilden, daß die Einrichtung zur Störfall-Unterdruckhaltung für den Ringraum auch bei einem auslegungsüberschreitenden Ereignis mit Kernschmelze vom Beginn der Kernschmelze bis zur Druckentlastung im Sicherheitsbehälter und darüber hinaus während der Überdruckphase im Sicherheitsbehälter wirksam und ausreichend langfristig funktionssicher eingesetzt werden kann.

Zur Lösung dieser Aufgabe lehrt die Erfindung, daß die Einrichtung für die Druckentlastung des Reaktorsicherheitsbehälters zumindest ein Metallfaserfilter und ein nachgeschaltetes Molekularsieb aufweist, daß die Einrichtung zur Störfall-Unterdruckhaltung zur Unterdruckhaltung im Ringraum auch bei auslegungsüberschreitenden Ereignissen mit Kernschmelze dimensioniert ist, und daß als Störfallfilter zumindest ein Metallfaserfilter und zumindest ein nachgeschaltetes Molekularsieb verwendet sind, welche nach Maßgabe auslegungsüberschreitender Ereignisse mit Kernschmelze ausgebildet sind. Nach bevorzugter Ausführungsform der Erfindung ist die Anordnung so getroffen, daß dem als Störfallfilter verwendeten Metallfaserfilter mit nachgeschaltetem Molekularsieb zumindest ein Schwebstoffilter und zumindest ein Aktivkohlefilter nachgeschaltet sind. Je nach Anforderungen an die einzelnen Filteraggregate, aber auch aus Redundanzgründen, sind mehrere der Filteraggregate mit Metallfaserfilter und Molekularsieb parallel oder in Reihe geschaltet. Aus gleichen Gründen empfiehlt es sich, im Bedarfsfall mehrere der Filteraggregate mit Metallfaserfilter, Vorfilter, Molekularsieb, Schwebstoffilter und Aktivkohlefilter parallel zu schalten.

Erfindungsgemäß werden die Metallfaserfilter und die Molekularsiebe, die bisher lediglich in der Einrichtung zur Druckentlastung eingesetzt worden sind, eingebaut in die Einrichtung zur Störfall-Unterdruckhaltung, für einen neuen Zweck verwendbar, nämlich in der beschriebenen Weise bei einem auslegungsüberschreitenden Ereignis mit Kernschmelze, eingesetzt. Überraschenderweise erfüllen die erfindungsgemäß verwendenten Filter ohne weiteres die Aufgabe, bei einem auslegungsüberschreitenden Ereignis mit Kernschmelze die Radioaktivitätsabsaugung aus dem Ringraum bis zur Druckentlastung und darüber hinaus während der Überdruckphase im Sicherheitsbehälter ausreichend langfristig sicherzustellen. Es empfiehlt sich, die Metallfaserfilter und die Molekularsiebe, die einerseits in der Einrichtung zur Druckentlastung eingesetzt sind und die andererseits in der Einrichtung zur Störfall-Unterdruckhaltung eingesetzt werden, als Modulbauteile auszuführen. Sie können für beide Einsatzfälle gleich sein.

Im folgenden wird die Erfindung anhand einer lediglich ein Ausführungsbeispiel darstellenden Zeichnung ausführlich erläutert. Es zeigen
- Fig. 1: das Schema eines erfindungsgemäßen Kernreaktors mit Einrichtung zur Störfall-Unterdruckhaltung und
- Fig. 2: eine andere Ausführungsform des Gegenstandes der Fig. 1.

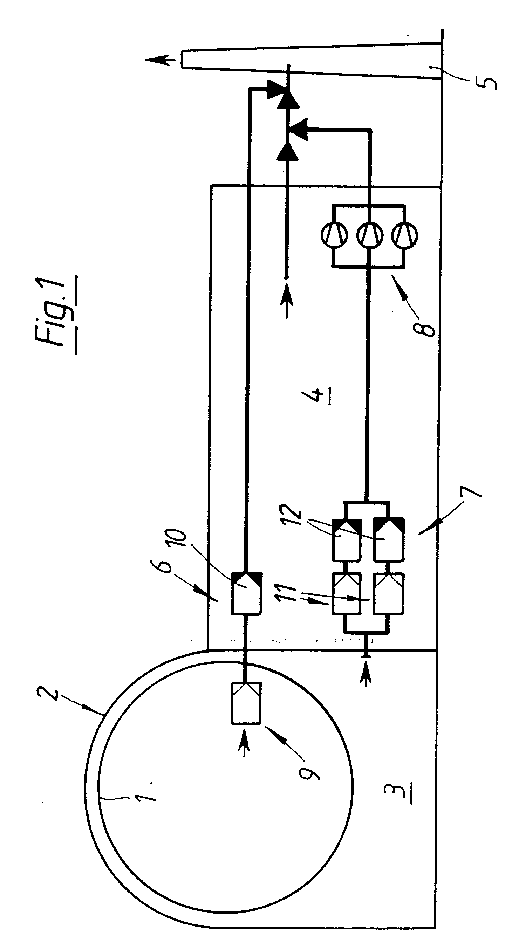

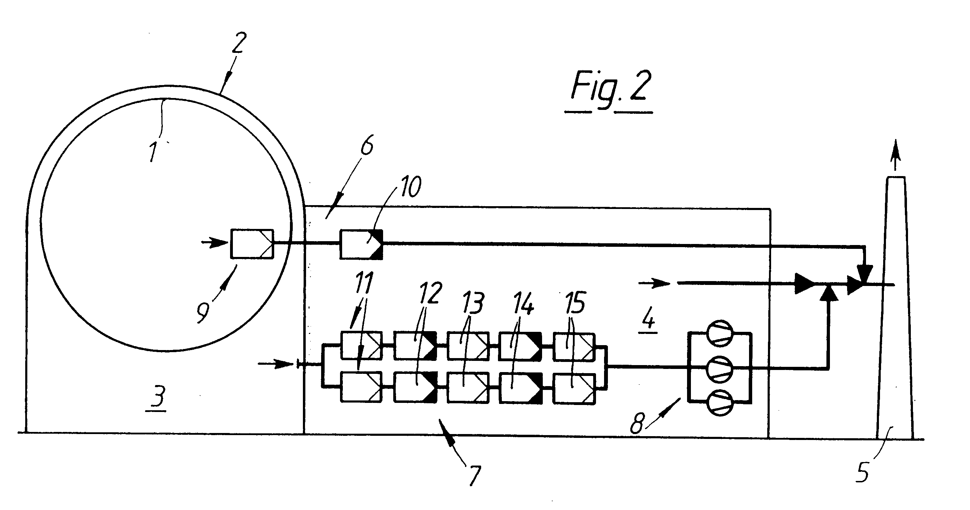

Man erkennt in dem Schema der Figuren 1 und 2 einen Reaktorsicherheitsbehälter 1, einen den Reaktorsicherheitsbehälter umgebenden, durch ein Ringraumbauwerk 2 gebildeten Ringraum 3, ein Hilfsanlagengebäude 4 und einen Fortluftkamin 5. Sowohl bei der Ausführungsform nach Fig. 1 als auch bei der Ausführungsform nach Fig. 2 sind eine Einrichtung 6 für die Druckentlastung des Reaktorsicherheitsbehälters 1 sowie eine Einrichtung 7 zur Störfall-Unterdruckhaltung, auch für auslegungsüberschreitende Ereignisse mit Kernschmelze vorgesehen. Die Einrichtung 7 zur Störfall-Unterdruckhaltung ist über einen Ventilator 8 an den Fortluftkamin 5 angeschlossen. Auch die Raumabluft aus dem Hilfsanlagengebäude 4 wird dem Fortluftkamin 5 zugeführt. Die entsprechenden Leitungen sind durch besonders dicke Strichführung und eingezeichnete Pfeile hervorgehoben.

Die Einrichtung 6 für die Druckentlastung des Reaktorsicherheitsbehälters 1 weist im Ausführungsbeispiel ein Metallfaserfilter 9 und ein nachgeschaltetes Molekularsieb 10 auf. Als Störfallfilter sind bei der Ausführungsform nach Fig. 1 Metallfaserfilter 11 und nachgeschaltete Molekularsiebe 12 verwendet. Bei der Ausführungsform nach Fig. 2 sind den als Störfallfilter verwendeten Metallfaserfiltern 11 und den nachgeschalteten Molekularsieben 12 Schwebstoffilter 13 und Aktivkohlefilter 14 nachgeschaltet. Im Ausführungsbeispiel ist aus den schon angegebenen Gründen die Anordnung so getroffen, daß mehrere der Filteraggregate 11, 12 parallel geschaltet sind bzw. daß mehrere der Filteraggregate 11, 12, 13, 14 parallel geschaltet sind. Bei der Ausführungsform nach Fig. 2 ist ein weiteres Schwebstoffilter 15 nachgeschaltet.

Die Filterleistung der Aerosolfilter 11, 13, 15 kann gestuft sein. Man entnimmt aus einer vergleichenden Betrachtung der Fig. 1 und 2, daß die Metallfaserfilter 11 und die Molekularsiebe 12, die einerseits in der Einrichtung 6 zur Druckentlastung eingesetzt sind und die andererseits in der Einrichtung 7 zur Störfall-Unterdruckhaltung eingesetzt sind, als Modulbauteile ausgeführt sind. Sie können gleich sein. - Weitere verfahrenstechnische Komponenten, wie z. B. Nebelabscheider, Tropfenabscheider, Erhitzer, werden je nach Auslegungsanforderung in die Systemtechnik integriert.

## Patentansprüche

1. Kernreaktor mit Reaktorsicherheitsbehälter (1), den Reaktorsicherheitsbehälter (1) umgebendem, durch ein Ringraumbauwerk (2) gebildetem Ringraum (3), Hilfsanlagengebäude (4) und Fortluftkamin (5),
wobei eine Einrichtung (6) für die Druckentlastung des Reaktorsicherheitsbehälters (1) eingerichtet ist,
wobei eine über zumindest einen Ventilator (8) an den Fortluftkamin (5) angeschlossene Einrichtung (7) zur Störfall-Unterdruckhaltung eingerichtet ist,
wobei die Einrichtung (6) für die Druckentlastung des Reaktorsicherheitsbehälters (1) mit Filtern sowie die Einrichtung (7) zur Störfall-Unterdruckhaltung mit Störfallfiltern ausgestattet sind,
**dadurch gekennzeichnet,**
daß die Einrichtung (6) für die Druckentlastung des Reaktorsicherheitsbehälters (1) zumindest ein Metallfaserfilter (9) und ein nachgeschaltetes Molekularsieb (10) aufweist,
daß die Einrichtung (7) zur Störfall-Unterdruckhaltung zur Unterdruckhaltung im Ringraum auch bei auslegungsüberschreitenden Ereignissen mit Kernschmelze dimensioniert ist,
und daß als Störfallfilter zumindest ein Metallfaserfilter (11) und zumindest ein nachgeschaltetes Molekularsieb (12) verwendet sind, welche nach Maßgabe auslegungsüberschreitender Ereignisse mit Kernschmelze ausgebildet sind.

2. Kernreaktor nach Anspruch 1, dadurch gekennzeichnet, daß dem als Störfallfilter verwendeten Metallfaserfilter (11) mit nachgeschaltetem Molekularsieb (12) zumindest ein Schwebstoffilter (13) und zumindest ein Aktivkohlefilter (14) nachgeschaltet sind.

3. Kernreaktor nach Anspruch 1, dadurch gekennzeichnet, daß mehrere des Filteraggregate mit Metallfaserfilter (11) und Molekularsieb (12) parallel geschaltet sind.

4. Kernreaktor nach Anspruch 2, dadurch gekennzeichnet, daß mehrere der Filteraggregate mit Metallfaserfilter (11), Molekularsieb (12), Schwebstoffilter (13) und Aktivkohlefilter (14) parallel geschaltet sind.

5. Kernreaktor nach einem der Ansprüche 1 bis 4, dadurch gekennzeichnet, daß die Metallfaserfilter (9 bzw. 11) und die Molekularsiebe (10 bzw. 12), die einerseits in der Einrichtung (6) zur Druckentlastung eingesetzt sind und die andererseits in der Einrichtung (7) zur Störfall-Unterdruckhaltung eingesetzt sind, als Modulbauteile ausgeführt sind.

## Claims

1. Nuclear reactor with reactor safety containment vessel (1), annulus (3) formed by an annular structure (2) surrounding the reactor safety containment vessel (1), auxiliary system building (4) and exhaust air stack (5),
whereby a fixture (6) is installed for the pressure relief of the reactor safety containment vessel (1),
whereby a fixture (7) connected through at least one blower (8) to the exhaust air stack (5) is installed to maintain the accident underpressure,
whereby the fixture (6) for the pressure relief of the reactor safety containment vessel (1) is equipped with filters and the fixture (7) to maintain the accident underpressure is equipped with accident filters,
**characterized in**
that the fixture (6) for the pressure relief of the reactor safety containment vessel (1) exhibits at least one metal fibre filter (9) and one molecular sieve (10) connected downstream,
that the fixture (7) to maintain the accident underpressure is also dimensioned to maintain the underpressure in the annulus even in the case of events exceeding the design with core meltdown,
and that at least one metal fibre filter (11) and at least one molecular sieve (12) connected downstream are used as accident filters, which are designed in accordance with events exceeding the design with core melt-down.

2. Nuclear reactor in accordance with Claim 1, **characterised** in that at least one particulate filter (13) and at least one activated charcoal filter (14) are connected downstream of the metal fibre filter (11) with the molecular sieve (12) connected downstream used as an accident filter.

3. Nuclear reactor in accordance with Claim 1, **characterised** in that several of the filter units with a metal fibre filter (11) and a molecular sieve (12) are connected in parallel.

4. Nuclear reactor in accordance with Claim 2, **characterised** in that several of the filter units with a metal fibre filter (11), a molecular sieve (12), particulate filter (13) and activated charcoal filter (14) are connected in parallel.

5. Nuclear reactor in accordance with one of the Claims 1 through 4, **characterised** in that the metal fibre filters (9 and 11 respectively) and the molecular sieves (10 and 12 respectively) which are used, on the one hand, in the fixture (6) for pressure relief and, on the other hand, in the fixture (7) to maintain the accident underpressure, are designed as modular components.

## Revendications

1. Réacteur nucléaire, comprenant une enceinte de confinement de réacteur (1), un espace annulaire (3) qui entoure l'enceinte de confinement (1) et est formé par une construction annulaire (2), un bâtiment (4) abritant les installations auxiliaires et une cheminée d'aération (5), un système (6) etant prévu pour la detente de l'enceinte de confinement, un système (7) raccordé par au moins un ventilateur (8) à la cheminée d'aération (5) étant prévu pour le maintien de la depression en cas d'incident, le système (6) pour la detente de l'enceinte de confinement (1) du réacteur étant équipé de filtres et le système (7) pour le maintien de la depression en cas d'incident comprenant des filtres d'urgence, **caractérisé** **en ce** que le système (6) pour la detente de l'enceinte de confinement (1) du réacteur comprend au moins un filtre en fibres métalliques (9) suivi d'un tamis moléculaire (10), que le système (7) pour le maintien de la depression en cas d'incident dans l'espace annulaire est dimensionné également pour des événements dépassant le cadre des accidents de référence, avec fusion du coeur, et que le filtre d'urgence est constitué par au moins un filtre en fibres métalliques (11) et au moins un tamis moléculaire (12) monté en aval, conçus en fonction des événements dépassant le cadre des accidents de référence, avec fusion du coeur.

2. Réacteur nucléaire selon la revendication 1, caractérisé en ce que le filtre en fibres métalliques (11), avec tamis moléculaire (12) monté en aval, utilisé comme fil-tre d'urgence est suivi par au moins un filtre pour matières en suspension (13) et par au moins un filtre à charbon actif (14).

3. Réacteur nucléaire selon la revendication 1, caractérisé en ce que plusieurs groupes de filtration avec filtre en fibres métalliques (11) et tamis moléculaire (12) sont montés en parallèle.

4. Réacteur nucléaire selon la revendication 2, caractérisé en ce que plusieurs groupes de filtration avec filtre en fibres métalliques (11), tamis moléculaire (12), filtre pour matières en suspension (13) et filtre à charbon actif (14) sont montés en parallèle.

5. Réacteur nucléaire selon l'une quelconque des revendications 1 à 4, caractérisé en ce que les filtres en fibres métalliques (9 et respectivement 11) et les tamis molé-culaires (10 et respectivement 12) montés d'une part dans le système (6) de détente et, d'autre part, dans le système (7) pour le maintien de la dépression en cas d'incident, sont réalisés sous la forme d'éléments modulaires.
